# EUROPÄISCHE PATENTANMELDUNG

(11) **EP 4 512 609 A1**
(43) Veröffentlichungstag der Anmeldung: **26.02.2025**
(21) Anmeldenummer: 24183072.8
(22) Anmeldetag: 19.06.2024
(51) Int. Cl.: B32B 3/04, B32B 3/06, B32B 5/02, B32B 5/26, B32B 15/14, B32B 15/20, B32B 27/12, E04B 1/76

(54) **DRUCKFESTE DÄMMSTOFFMATTE UND VERFAHREN ZUM MEHRLAGIGEN ANORDNEN EINER DRUCKFESTEN DÄMMSTOFFMATTE FÜR EINEN TRANSPORT ODER EINE LAGERUNG DIESER**

(30) Priorität: 21.08.2023 AT 5013523 U
(71) Anmelder: Mayer, Michael Johannes, 9586 Fürnitz (AT)
(72) Erfinder: Mayer, Michael Johannes, 9586 Fürnitz (AT)
(74) Vertreter: Wirnsberger & Lerchbaum Patentanwälte OG

(57) **Zusammenfassung**

Die Erfindung betrifft eine Dämmstoffmatte, insbesondere Lamellenmatte (1), welche Dämmstoffmatte übereinander angeordnet eine Faserschicht (4) und eine Folienschicht (5) aufweist, wobei die Faserschicht (4) mit quer zur Folienschicht (5) orientierten Fasern gebildet ist. Zur Erreichung einer großen Lagerfähigkeit und/oder Transportfähigkeit ist vorgesehen, dass die Dämmstoffmatte unter Biegung der Dämmstoffmatte in mehreren einander in einer Überlappungsrichtung (U) überlappenden Lagen (3) angeordnet ist, sodass die Dämmstoffmatte eine Anordnungsform bildet, welche in einem Lateralquerschnitt der Dämmstoffmatte eine, vorzugsweise mehrere, im Wesentlichen geradlinige Außenkanten (2) aufweist.

Weiter betrifft die Erfindung ein Verfahren zum Verfahren zum mehrlagigen Anordnen einer Dämmstoffmatte, insbesondere einer Lamellenmatte (1), für einen Transport oder eine Lagerung der Dämmstoffmatte.

## Beschreibung

Die Erfindung betrifft eine Dämmstoffmatte, insbesondere eine Lamellenmatte, welche Dämmstoffmatte übereinander angeordnet eine Faserschicht und eine Folienschicht aufweist, wobei die Faserschicht mit quer zur Folienschicht orientierten Fasern gebildet ist.

Weiter betrifft die Erfindung ein Verfahren zum mehrlagigen Anordnen einer Dämmstoffmatte, insbesondere einer Lamellenmatte, für einen Transport oder eine Lagerung der Dämmstoffmatte, welche Dämmstoffmatte übereinander angeordnet eine Faserschicht und eine Folienschicht aufweist, wobei die Faserschicht mit quer zur Folienschicht orientierten Fasern gebildet ist.

Lamellenmatten, gebildet mit einer Faserschicht und einer Folienschicht, wobei die Folienschicht mit einer Aluminiumfolie und die Faserschicht mit stehend auf der Aluminiumfolie angeordneten Fasern, üblicherweise Mineralwollfasern oder Glasfasern, gebildet ist, werden häufig zur Umsetzung einer Wärmeisolierung von temperierten Wasserleitungen oder Lüftungskanälen eingesetzt. Die Aluminiumfolie wird häufig als Aluminiumkaschierung bezeichnet. Die Fasern sind üblicherweise in Form von quer zu einer Längserstreckung der Lamellenmatte verlaufenden Lamellen gruppiert angeordnet und in der Regel an der Aluminiumfolie angeklebt. Für einen Transport von Lamellenmatten zu einem Einsatzort ist es bekannt, die jeweilige Lamellenmatte rollenförmig aufzuwickeln und mehrere rollenförmig aufgewickelte Lamellenmatten aufeinander zu stapeln.

Zur Erreichung eines verbesserten Packmaßes ist es für Dämmstoffmatten mit in Bezug auf eine Längsrichtung der jeweiligen Dämmstoffmatte liegend angeordneten Fasern üblicherweise vorteilhaft, wenn die jeweilige Dämmstoffmatte nach einer rollenförmigen Aufwicklung dieser unter Druckbeaufschlagung, in der Regel mit einer Presse, aktiv komprimiert wird. Bei Lamellenmatten ist eine solche Komprimierung aufgrund derer üblicherweise in Bezug auf die Längserstreckung bzw. auf die Aluminiumfolie stehend angeordneten Fasern in der Regel nicht umsetzbar, da dadurch eine Dämmfähigkeit der Lamellenmatte beeinträchtigt würde.

Hier setzt die Erfindung an. Aufgabe der Erfindung ist es, eine Dämmstoffmatte der eingangs genannten Art anzugeben, welche eine große Lagerfähigkeit und/oder eine große Transportfähigkeit aufweist.

Weiter ist es Ziel der Erfindung, ein Verfahren der eingangs genannten Art zur mehrlagigen Anordnung einer Dämmstoffmatte anzugeben, sodass die Dämmstoffmatte eine große Lagerfähigkeit und/oder eine große Transportfähigkeit aufweist.

Die Aufgabe wird erfindungsgemäß dadurch gelöst, dass eine Dämmstoffmatte der eingangs genannten Art für eine Lagerung oder einen Transport der Dämmstoffmatte unter Biegung der Dämmstoffmatte in mehreren einander in einer Überlappungsrichtung überlappenden Lagen angeordnet ist, sodass die Dämmstoffmatte eine Anordnungsform bildet, welche in einem Lateralquerschnitt der Dämmstoffmatte eine, vorzugsweise mehrere, im Wesentlichen geradlinige Außenkanten aufweist.

Grundlage der Erfindung ist die Idee, die Dämmstoffmatte derart mit Biegen, insbesondere Falten, der Dämmstoffmatte in einer Anordnungsform anzuordnen, dass die Dämmstoffmatte ein für einen Transport oder eine Lagerung der Dämmstoffmatte günstiges Packmaß aufweist, wobei im Besonderen die Dämmstoffmatte, insbesondere deren Faserschicht, nicht aktiv komprimiert ist, um eine Dämmfähigkeit der Faserschicht nicht zu beeinträchtigen. Es hat sich gezeigt, dass dies mit einer Dämmstoffmatte, insbesondere Dämmstoffmattenanordnung der Dämmstoffmatte, erreichbar ist, wobei die Dämmstoffmatte unter Biegung, insbesondere Faltung, der Dämmstoffmatte in mehreren einander in einer Überlappungsrichtung überlappenden Lagen angeordnet ist, sodass die Dämmstoffmatte eine Anordnungsform bildet, welche in einem Lateralquerschnitt der Dämmstoffmatte bzw. Anordnungsform eine, vorzugsweise mehrere, im Wesentlichen geradlinige Außenkanten aufweist. Üblicherweise verläuft der Lateralquerschnitt parallel zur Längserstreckung der Dämmstoffmatte und parallel zur Überlappungsrichtung durch die Dämmstoffmatte bzw. deren Anordnungsform. Beispielsweise kann die Anordnungsform im Wesentlichen quaderförmig sein, üblicherweise mit im Lateralquerschnitt abgerundeten Ecken der Anordnungsform. Auf diese Weise kann die Dämmstoffmatte, insbesondere mehrere nebeneinander und/oder übereinander angeordnete derartige Dämmstoffmatten, mit verringertem Platzbedarf angeordnet werden, insbesondere im Vergleich zu rollenförmig aufgewickelten Dämmstoffmatten, welche üblicherweise eine Anordnungsform mit einer im Lateralquerschnitt im Wesentlichen kreisförmigen Außenkontur aufweisen. Beispielsweise können in einem Laderaum, beispielsweise eines Transportfahrzeuges, mehrere derartige Dämmstoffmatten zur Lagerung oder zum Transport dieser, insbesondere aneinander angrenzend, üblicherweise nebeneinander und/oder übereinander mit geringem Platzbedarf angeordnet werden.

Eine Längserstreckung und eine Breitenerstreckung der Dämmstoffmatte sind üblicherweise jeweils größer als eine Höhenerstreckung der Dämmstoffmatte. Üblicherweise korrespondiert die Längserstreckung zu einer Längsrichtung der Dämmstoffmatte, die Breitenerstreckung zu einer Breitenrichtung der Dämmstoffmatte und die Höhenerstreckung zu einer Höhenrichtung der Dämmstoffmatte. Die Längsrichtung, die Breitenrichtung und die Höhenrichtung der Dämmstoffmatte sind üblicherweise jeweils orthogonal zueinander. Die Dämmstoffmatte kann eine streifenförmige Gestalt aufweisen. Üblicherweise bezieht sich die Anordnungsform der Dämmstoffmatte auf eine durch Biegen und/oder Falten der Dämmstoffmatte umgesetzte Gestalt der Dämmstoffmatte. Die Folienschicht und die Faserschicht sind üblicherweise in Höhenrichtung der Dämmstoffmatte übereinander, insbesondere aufeinander, angeordnet und in der Regel stoffschlüssig, meist mittels Klebstoff, miteinander verbunden. Die Dämmstoffmatte kann aus der Faserschicht und der Folienschicht bestehen. Der Klebstoff kann Teil der Dämmstoffmatte und/oder der Faserschicht sein. Die Dämmstoffmatte ist zur Bildung der Anordnungsform üblicherweise entlang der Längserstreckung der Dämmstoffmatte gebogen, insbesondere gefaltet, üblicherweise an mehreren, in der Regel voneinander beabstandeten, Bereichen entlang der Längserstreckung der Dämmstoffmatte. Der Lateralquerschnitt bezieht sich üblicherweise auf die Dämmstoffmatte bzw. deren Anordnungsform. Der Lateralquerschnitt ist üblicherweise parallel zur Längserstreckung der Dämmstoffmatte und/oder parallel zur Überlappungsrichtung orientiert. Die Längserstreckung der Dämmstoffmatte verläuft üblicherweise entlang der Dämmstoffmatte von einem Ende der Dämmstoffmatte zu einem anderen Ende der Dämmstoffmatte, insbesondere unabhängig von einer mit Biegen und/oder Falten der Dämmstoffmatte umgesetzten Anordnungsform der Dämmstoffmatte. Im Lateralquerschnitt kann die jeweilige im Wesentlichen geradlinige Außenkante eine überwiegend, vorzugsweise im Wesentlichen, geradlinige Seitenkante der Anordnungsform sein, welche Seitenkante in der Regel zwei benachbarte, häufig abgerundete, Ecken der Anordnungsform miteinander verbindet.

Typischerweise sind die Fasern, insbesondere deren jeweilige Längserstreckung, im Wesentlichen quer, insbesondere im Wesentlichen orthogonal, zur Längsrichtung und zur Breitenrichtung der Dämmstoffmatte, insbesondere der Folienschicht, orientiert. Dies gilt insbesondere für die jeweilige Faser. Es kann die überwiegende Anzahl der Fasern der Faserschicht derart umgesetzt sein. In der Regel sind mehr als 75 %, insbesondere mehr als 90%, bevorzugt mehr als 95 %, besonders bevorzugt im Wesentlichen sämtliche, der Fasern der Faserschicht derart umgesetzt. In der Regel ist die Faserschicht im Wesentlichen aus Fasern gebildet. Die Fasern sind üblicherweise Mineralwollfasern und/oder Glaswollfasern.

Die Folienschicht ist in der Regel mit einer, insbesondere mit Aluminium gebildeten, Folie und/oder einem Flies, insbesondere einem Glasflies, und/oder einer Gewebeschicht gebildet. Die Folie ist üblicherweise mit, insbesondere aus, einem Metall, insbesondere Aluminium, gebildet. Typischerweise sind die Fasern stehend in Bezug auf die Folienschicht, insbesondere auf der Folie bzw. dem Flies bzw. der Gewebeschicht, angeordnet. In der Regel ist die Faserschicht, insbesondere sind die Fasern, stoffschlüssig, insbesondere mit Klebstoff und/oder mit thermoplastischem Kunststoff, insbesondere Polyethylen (PE), mit der Folienschicht, insbesondere der Folie, verbunden. Dies gilt insbesondere für die jeweilige Faser. Der Kunststoff bzw. der thermoplastische Kunststoff kann eine Verbindungsschicht, insbesondere einen Verbindungsfilm, bilden. Beispielsweise kann die Faserschicht mit, insbesondere durch, eine PE-Verbindungsschicht mit der Folienschicht verbunden sein. Üblicherweise erfolgt ein, insbesondere stoffschlüssiges, Verbinden der Fasern mit dem thermoplastischen Kunststoff mit Erwärmen des thermoplastischen Kunstoffs. Der Klebstoff bzw. thermoplastische Kunststoff ist üblicherweise Teil der Dämmstoffmatte, insbesondere Teil der Folienschicht und/oder Teil der Faserschicht. Die Folienschicht, insbesondere Folie, und/oder die Faserschicht erstreckt sich üblicherweise jeweils im Wesentlichen gänzlich entlang einer Breitenerstreckung und Längserstreckung der Dämmstoffmatte. Typischerweise bildet die Folienschicht eine erste Hauptfläche der Dämmstoffmatte und die Faserschicht eine zweite Hauptfläche der Dämmstoffmatte, welche zweite Hauptfläche der ersten Hauptfläche an der Dämmstoffmatte gegenüberliegt. Üblicherweise ist die jeweilige Hauptfläche mit einer Längserstreckung und Breitenerstreckung der Dämmstoffmatte definiert. Die Hauptflächen bilden üblicherweise Außenoberflächen der Dämmstoffmatte. Die Folienschicht kann mit einer oder mehreren, insbesondere übereinander angeordneten, Folien gebildet sein. Die Folien der Folienschicht können, insbesondere stoffschlüssig, miteinander verbunden sein. Die Folien können eine Verbundfolie oder Mehrschichtfolie bilden. Die Folienschicht kann auch als Kaschierungsschicht bezeichnet sein. Die Dämmstoffmatte, insbesondere Folienschicht, kann eine Gitterschicht aufweisen. Die Gitterschicht ist üblicherweise zwischen der Folie und den Fasern angeordnet. Die Gitterschicht kann auf der Folie, insbesondere stoffschlüssig mit der Folie verbunden, angeordnet sein.

Die Faserschicht ist üblicherweise mit mehreren quer, insbesondere orthogonal, zu einer Längsrichtung der Dämmstoffmatte orientierten Lamellen, welche die Fasern aufweisen, gebildet. Bei einem Biegen, insbesondere Falten, der Dämmstoffmatte in Längsrichtung, insbesondere um eine quer zur Längsrichtung orientierte Biegeachse, der Dämmstoffmatte können Bereiche zwischen den Lamellen eine sich in einer Richtung parallel zur Höhenrichtung erweiternden Spalt bilden. Dadurch ist ein praktikables Biegen, insbesondere Falten, der Dämmstoffmatte ermöglicht. Eine Längsrichtung der jeweiligen Lamelle verläuft üblicherweise quer, insbesondere orthogonal, zur Längsrichtung der Dämmstoffmatte und orthogonal zur Höhenrichtung der Dämmstoffmatte. Üblicherweise sind die Lamellen in Längsrichtung der Dämmstoffmatte hintereinander angeordnet.

Die Anordnungsform weist im Lateralquerschnitt vorzugsweise mehrere im Wesentlichen geradlinige Außenkanten auf. Die Außenkante kann auch als Außenkonturabschnitt bezeichnet sein. Die geradlinigen Außenkanten können sich im Lateralquerschnitt zwischen gebogen verlaufenden Eckbereichskanten der Anordnungsform erstrecken, insbesondere jeweils an diese anschließen. Günstig ist es, wenn die Anordnungsform im Lateralquerschnitt zumindest zwei einander an der Anordnungsform gegenüberliegende im Wesentlichen geradlinige Außenkanten aufweist. Die zwei geradlinigen Außenkanten können parallel zueinander sein. Zweckmäßig kann eine im Wesentlichen geradlinige erste Außenkante an einer Oberseite und eine im Wesentlichen geradlinige zweite Außenkante an einer Unterseite der Anordnungsform angeordnet sein. Die jeweilige Außenkante korrespondiert üblicherweise zu einer Außenfläche der Anordnungsform. Beispielsweise kann die erste Außenkante zu einer Bodenfläche der Anordnungsform korrespondieren, an welcher Bodenfläche die Anordnungsform an einem Untergrund aufliegt, und die zweite Außenkante zu einer Deckfläche der Anordnungsform korrespondieren, welche Deckfläche eine Oberseitenfläche der Anordnungsform bildet. Die zwei geradlinigen Außenkanten, insbesondere die erste Außenkante und die zweite Außenkante, können im Wesentlichen parallel zueinander orientiert sein. Die jeweilige geradlinige Außenkante kann eine überwiegende, vorzugsweise im Wesentlichen gänzliche, Länge einer Seitenkante der Anordnungsform sein. Die geradlinigen Außenkanten, insbesondere zwei geradlinigen Außenkanten, beispielsweise die erste Außenkante und die zweite Außenkante, der Anordnungsform können mit der Folienschicht oder mit der Faserschicht gebildet sein. Bevorzugt ist es, wenn diese mit der Folienschicht gebildet sind. Vorgenanntes gilt insbesondere im Lateralquerschnitt.

Praktikabel ist es, wenn die Anordnungsform im Lateralquerschnitt im Wesentlichen rechteckig, quadratisch oder trapezförmig ausgebildet ist, insbesondere im Wesentlichen eine solche Außenkontur aufweist. Die Anordnungsform kann eine Form einer gedachten Folienhülle bezeichnen, welche Folienhülle die Dämmstoffmatte einhüllend umspannt. Dabei werden üblicherweise lokale Vertiefungen einer Außenfläche der Dämmstoffmatte von der Folienhülle überspannt. In der Regel sind für die Definition der Anordnungsform lokale Vertiefungen und/oder Erhöhungen, beispielsweise an einem Anfang oder Ende der Dämmstoffmatte, vernachlässigbar.

Die Dämmstoffmatte ist üblicherweise derart, insbesondere unter Biegung und/oder Faltung der Dämmstoffmatte, angeordnet, dass im Lateralquerschnitt mehrere Dämmstoffmattensegmente der Dämmstoffmatte, welche entlang der Längserstreckung der Dämmstoffmatte hintereinander, insbesondere beabstandet voneinander, angeordnet sind, einander in der Überlappungsrichtung überlappen. Das jeweilige Dämmstoffmattensegment kann in Längsrichtung der Dämmstoffmatte überwiegend, insbesondere im Wesentlichen, geradlinig bzw. eben geformt sein. Eine jeweilige durch Biegen der Dämmstoffmatte gebildete Lage der Dämmstoffmatte bzw. der Anordnungsform kann mit einer, insbesondere einer einzigen, oder mehreren der Dämmstoffmattensegmenten gebildet sein. Entlang der Längserstreckung der Dämmstoffmatte können zwischen den, üblicherweise geradlinigen, Dämmstoffmattensegmenten gebogene Verbindungsbereiche der Dämmstoffmatte vorhanden sein. In der Regel sind entlang der Längserstreckung der Dämmstoffmatte jeweils zwei, insbesondere einander in Überlappungsrichtung überlappende, benachbarte Dämmstoffmattensegmente durch einen gebogenen Verbindungsbereich miteinander verbunden. Vorgenanntes gilt insbesondere im Lateralquerschnitt. Üblicherweise korrespondieren die geradlinigen Außenkanten der Anordnungsform jeweils zu einem Dämmstoffmattensegment und/oder korrespondieren die Eckbereichskanten jeweils zu einem gebogenen Verbindungsbereichen. Die im Lateralquerschnitt jeweilige geradlinige Außenkante repräsentiert üblicherweise jeweils einen im Wesentlichen ebenen Außenflächenabschnitt der Anordnungsform. Das jeweilige Dämmstoffmattensegment kann mehrere der Lamellen aufweisen. Das jeweilige Dämmstoffmattensegment kann sich über eine überwiegende Länge der jeweiligen mit dem Dämmstoffmattensegment gebildeten Lage der Dämmstoffmatte erstrecken. Im Besonderen kann die jeweilige Lage überwiegend, insbesondere im Wesentlichen, durch das Dämmstoffmattensegment der Lage gebildet sein.

Günstig ist es, wenn die Dämmstoffmatte zur Bildung der Anordnungsform, üblicherweise entlang der Längserstreckung der Dämmstoffmatte, serpentinenartig gefaltet ist. Üblicherweise ist die Dämmstoffmatte derart gefaltet, dass in Überlappungsrichtung Dämmstoffmattensegmente derart übereinander angeordnet sind, dass in Überlappungsrichtung abwechselnd jeweils die Folienschichten und die Faserschichten von zwei unmittelbar übereinander angeordneten Dämmstoffmattensegmenten einander zugewandt sind, insbesondere aneinander angrenzen. Die Dämmstoffmatte ist üblicherweise derart gefaltet, dass im Lateralquerschnitt entlang der Längserstreckung der Dämmstoffmatte jeweils eine Lage der Anordnungsform mit einem überwiegend, insbesondere im Wesentlichen, geradlinigen Dämmstoffmattensegment gebildet ist, wobei in Überlappungsrichtung eine jeweilige Lage mit einer dieser vorgeordneten Lage an einer ersten Seite der Anordnungsform mit einem gebogenen Verbindungsbereich der Dämmstoffmatte verbunden ist und mit einer dieser nachgeordneten Lage an einer der ersten Seite an der Anordnungsform gegenüberliegenden zweiten Seite der Anordnungsform mit einem gebogenen Verbindungsbereich der Dämmstoffmatte verbunden ist. Die erste Seite und zweite Seite liegen einander üblicherweise in einer Richtung orthogonal zur Überlappungsrichtung an der Anordnungsform gegenüber. Die jeweiligen Dämmstoffmattensegmente der jeweiligen Lagen sind üblicherweise über die gebogenen Segmente miteinander verbunden. Vorgenanntes gilt insbesondere im Lateralquerschnitt.

Alternativ kann es praktikabel sein, wenn die Dämmstoffmatte zur Bildung der Anordnungsform, üblicherweise um eine Wickelachse, spiralförmig aufgewickelt ist. Die Dämmstoffmatte ist dabei üblicherweise derart aufgewickelt, dass, insbesondere im Lateralquerschnitt, entlang der Längserstreckung der Dämmstoffmatte hintereinander angeordnete Dämmstoffmattensegmente, welche überwiegend, insbesondere im Wesentlichen, geradlinig ausgebildet sind, durch gebogene Verbindungsbereiche der Dämmstoffmatte miteinander verbunden sind.

Für eine hohe Robustheit ist es günstig, wenn die Dämmstoffmatte derart gebogen, insbesondere gefaltet oder gewickelt, ist, dass bei einer in Bezug auf die Überlappungsrichtung obersten Lage und/oder untersten Lage der Lagen, insbesondere einem obersten Dämmstoffmattensegment und/oder untersten Dämmstoffmattensegment der Dämmstoffsegmente, jeweils die Folienschicht, insbesondere die Folie, oder die Faserschicht, insbesondere in einer Richtung parallel zur Überlappungsrichtung, außenseitig an der Anordnungsform angeordnet ist. Es kann bei der obersten Lage, insbesondere dem obersten Dämmstoffmattensegment, und der untersten Lage, insbesondere dem untersten Dämmstoffmattensegment, die jeweilige Folienschicht, im Besonderen die jeweilige Folie, oder die jeweilige Faserschicht, insbesondere in einer Richtung parallel zur Überlappungsrichtung, außenseitig an der Anordnungsform angeordnet sein. Bewährt hat es sich, wenn die geradlinigen Außenkanten der Anordnungsform durch die Folienschicht, insbesondere Folie, gebildet sind.

Von Vorteil ist es, wenn ein Dämmstoffmattengebinde, aufweisend eine Dämmstoffmatte, insbesondere eine Lamellenmatte, vorhanden ist, wobei die Dämmstoffmatte mit einem Fixiermittel, insbesondere einer Fixierfolie, des Dämmstoffmattengebindes in der Anordnungsform zusammengehalten wird. Die Dämmstoffmatte kann wie in diesem Dokument beschrieben umgesetzt sein. Auf diese Weise kann ein Lagerzustand für eine Lagerung der Dämmstoffmatte oder ein Transportzustand für einen Transport der Dämmstoffmatte mit hoher Robustheit umgesetzt sein. Das Fixiermittel kann eine Schnürung und/oder eine Fixierfolie und/oder ein Fixierband, insbesondere mehrere Fixierbänder, sein. Das Fixiermittel kann entlang eines Umfanges der Anordnungsform um die Anordnungsform verlaufen. Die Dämmstoffmatte ist mit dem Fixiermittel vorzugsweise derart zusammengehalten, dass die Dämmstoffmatte, insbesondere die Faserschicht, nicht aktiv komprimiert ist.

Die Dämmstoffmatte ist üblicherweise derart angeordnet, dass die Dämmstoffmatte, insbesondere die Faserschicht, nicht aktiv komprimiert ist. Eine nicht aktive Komprimierung der Dämmstoffmatte bezeichnet üblicherweise einen Zustand der Dämmstoffmatte in der Anordnungsform, bei welcher ein Volumen der Anordnungsform im Vergleich zu einem lediglich von einem Eigengewicht der Dämmstoffmatte belasteten Zustand der Anordnungsform um weniger als 10 %, insbesondere weniger als 5 %, bevorzugt weniger als 1 %, besonders bevorzugt im Wesentlichen nicht, verringert ist.

Die Dämmstoffmatte, insbesondere Lamellenmatte, ist üblicherweise eine druckfeste Dämmstoffmatte, insbesondere druckfeste Lamellenmatte. Im Besonderen ist die Faserschicht, insbesondere sind die Fasern, in der Regel druckfest ausgebildet. Druckfest bezieht sich in der Regel auf einen fachtypischen Einsatzzweck der Dämmstoffmatte.

Vorteilhaft ist es, wenn eine Anordnung zur Lagerung und/oder zum Transport von mehreren Dämmstoffmatten vorhanden ist, wobei die Anordnung mit mehreren nebeneinander und/oder übereinander angeordneten Dämmstoffmatten oder mit mehreren nebeneinander und/oder übereinander angeordneten Dämmstoffmattengebinden gebildet ist. Die Dämmstoffmatten und/oder die Dämmstoffmattengebinde können wie in diesem Dokument beschrieben umgesetzt sein. Die Dämmstoffmatten oder die Dämmstoffmattengebinde können aufeinander gestapelt sein. Die Dämmstoffmatten oder Dämmstoffmattengebinde können, insbesondere unmittelbar, aneinander angrenzend angeordnet sein.

Das Ziel wird erreicht, wenn bei einem Verfahren der eingangs genannten Art zum mehrlagigen Anordnen einer Dämmstoffmatte, insbesondere einer Lamellenmatte, für einen Transport oder eine Lagerung der Dämmstoffmatte die Dämmstoffmatte unter Biegung der Dämmstoffmatte in mehreren einander in einer Überlappungsrichtung überlappenden Lagen angeordnet wird, sodass die Dämmstoffmatte eine Anordnungsform bildet, welche in einem Lateralquerschnitt der Dämmstoffmatte bzw. Anordnungsform eine, vorzugsweise mehrere, im Wesentlichen geradlinige Außenkanten aufweist. Wie vorstehend ausgeführt kann auf diese Weise die Dämmstoffmatte derart angeordnet werden, dass die Dämmstoffmatte ein für einen Transport oder eine Lagerung der Dämmstoffmatte günstiges Packmaß aufweist, wobei insbesondere eine aktive Komprimierung der Dämmstoffmatte, insbesondere deren Faserschicht, vermeidbar ist.

Anschließend kann die Dämmstoffmatte, insbesondere als Teil einer Anordnung von mehreren Dämmstoffmatten, insbesondere wie vorstehend ausgeführt, gelagert oder zu einem Einsatzort transportiert werden. Üblicherweise wird am Einsatzort die Anordnungsform, in der Regel für einen Dämmungsvorgang mit der Dämmstoffmatte, wieder aufgehoben, insbesondere die Dämmstoffmatte wieder entfaltet bzw. abgewickelt. Das Verfahren kann mit einer in diesem Dokument beschriebenen Dämmstoffmatte umgesetzt sein. Das Verfahren kann entsprechend den Merkmalen und Wirkungen, welche im Rahmen einer Dämmstoffmatte, insbesondere vorstehend, in diesem Dokument beschrieben sind, ausgebildet sein. Analoges gilt auch für die Dämmstoffmatte im Hinblick auf das Verfahren.

Günstig ist es, wenn die Dämmstoffmatte zur Bildung der Anordnungsform, üblicherweise entlang der Längserstreckung der Dämmstoffmatte, serpentinenartig gefaltet wird. Zweckmäßig kann eine Anordnungsvorrichtung vorgesehen sein, wobei die Anordnungsvorrichtung eine Führungseinrichtung mit einem oder mehreren gesteuert, insbesondere geregelt, beweglichen Führungselementen zum geführten Verschieben von Abschnitten der Dämmstoffmatte mit der Führungseinrichtung aufweist, um in Längsrichtung der Dämmstoffmatte aufeinanderfolgende Bereiche der Dämmstoffmatte mit Bewegen der Führungselemente serpentinenartig gefaltet aufeinander abzulegen.

Praktisch, insbesondere in einer ersten Variante, zur serpentinenartigen Faltung der Dämmstoffmatte ist es, wenn die Dämmstoffmatte mit einer alternierenden Bewegung, insbesondere der Dämmstoffmatte, auf einer Anordnungsfläche sukzessive abgelegt wird. Die Lamellenmatte kann sukzessive zwischen mehreren gesteuert beweglichen Führungselementen hindurch auf der Anordnungsfläche abgelegt werden, wobei mit alternierenden Bewegungen der Führungselemente, insbesondere relativ zur Anordnungsfläche, die Lamellenmatte bereichsweise mit den Führungselementen geführt wird, sodass die Lamellenmatte in einer serpentinenartigen Faltung sukzessive auf der Anordnungsfläche abgelegt wird. Die Führungselemente sind üblicherweise separat voneinander gesteuert, insbesondere geregelt, bewegbar. Dabei können die Führungselemente alternierend in Bewegungsrichtungen quer zur Überlappungsrichtung bzw. quer zu einer Ablageflächennormale der Ablagefläche bewegt werden, wobei üblicherweise ein Abstand der Führungselemente zur Ablagefläche variiert, insbesondere vergrößert wird. Günstig ist es, wenn die Dämmstoffmatte in vertikaler Richtung auf der Anordnungsfläche abgelegt wird. Die Anordnungsvorrichtung kann eine Zuführungseinrichtung aufweisen, mit welcher die Dämmstoffmatte zur Anordnungsfläche geführt wird.

Die Anordnungsfläche kann mit einem Boden eines Aufnahmebereiches gebildet sein. Die serpentinenartige Faltung der Dämmstoffmatte kann im Aufnahmebereich erfolgen. Die Dämmstoffmatte wird üblicherweise in einer Ablegerichtung, welche vorzugsweise vertikal orientiert ist, auf dem Boden serpentinenartig gefaltet abgelegt. Die Ablegerichtung ist üblicherweise parallel zur Überlappungsrichtung und/oder parallel zur Ablageflächennormale. Üblicherweise ist der Aufnahmebereich mit dem Boden und mehreren quer, insbesondere orthogonal, zum Boden orientierten Seitenwänden gebildet, wobei die Seitenwände eine seitliche Führung für einen auf dem Boden abgelegten Teil einer Dämmstoffmatte bilden. Der Aufnahmebereich ist üblicherweise von den Seitenwänden und dem Boden begrenzt. In der Regel sind zumindest zwei voneinander beabstandete Seitenwände vorgesehen, wobei sich der Aufnahmebereich zumindest teilweise zwischen den Seitenwänden befindet. Die Seitenwände können eine gemeinsame Seitenwand bildend ineinander übergehen. Der Aufnahmebereich kann ein Aufnahmebehälter zur Aufnahme der Dämmstoffmatte sein. Der Boden und die Seitenwände können relativ zueinander bewegbar sein. Im Besonderen kann der Boden in Ablegerichtung relativ zu den Seitenwänden bewegbar sein. Dadurch kann der Aufnahmebereich größenvariiert werden. Eine oder mehrere der Seitenwände können relativ zu den übrigen Seitenwänden und/oder dem Boden, insbesondere in Ablegerichtung, bewegbar sein, um den Aufnahmebereich zur Entnahme der Dämmstoffmatte aus dem Aufnahmebereich zu öffnen. Eine hohe Faltungsgenauigkeit ist erreichbar, wenn eine der Seitenwände eine entlang der Seitenwand verlaufende Förderstrecke mit einem entlang einer Oberfläche der Seitenwand gesteuert verfahrbaren Förderelement aufweist, um zur Führung eines im Aufnahmebereich befindlichen Teils der Dämmstoffmatte einen am Boden bzw. der Seitenwand anliegenden Abschnitt der Dämmstoffmatte durch Verfahren des Förderelementes mit einer Kraft zu beaufschlagen. Die Förderstrecke kann mehrere Förderelemente aufweisen. Die Förderstrecke kann ein Stetigförderer, insbesondere in Form eines Bandförderers, sein. Der Bandförderer kann ein entlang der Seitenwand verlaufendes Förderband als Förderelement aufweisen. Üblicherweise ist vorgesehen, dass das Förderelement parallel zur Höhenrichtung der Seitenwand verfahrbar ist. Zweckmäßig ist es, wenn mehrere Seitenwände, insbesondere zwei in Bezug auf den Aufnahmebereich einander gegenüberliegende Seitenwände, eine solche Förderstrecke aufweisen. Praktikabel ist es, wenn der Boden eine analog umgesetzte Förderstrecke aufweist, um nach einer Ablage der Dämmstoffmatte auf der Ablagefläche die Dämmstoffmatte mit der Förderstrecke aus dem Aufnahmebereich abzutransportieren.

Praktisch, insbesondere in einer zweiten Variante, zur serpentinenartigen Faltung der Dämmstoffmatte ist es, wenn die Dämmstoffmatte zwischen mehreren Führungselementen hindurchgeführt wird, sodass im Lateralquerschnitt der Dämmstoffmatte an in Bezug auf eine Längsachse der Lamellenmatte einander gegenüberliegenden Seiten der Lamellenmatte entlang der Längserstreckung der Dämmstoffmatte jeweils mehrere Führungselemente beabstandet voneinander angeordnet sind, wonach mehrere der Führungselemente relativ zueinander, insbesondere quer zur Längserstreckung der Dämmstoffmatte, unter Verschiebung von Abschnitten der Dämmstoffmatte, insbesondere translatorisch, bewegt werden, sodass eine serpentinenartige Faltung der Dämmstoffmatte gebildet wird. Die Führungselemente können Führungsrollen sein. Die Dämmstoffmatte kann derart zwischen den Führungsrollen hindurchgeführt werden, dass eine Längsrichtung der Führungsrollen parallel zu einer Breitenrichtung der Dämmstoffmatte ist. Die Führungsrollen können jeweils eine um die Längsachse der jeweiligen Führungsrolle rotierbare Mantelfläche aufweisen, wobei bei einem relativen Bewegen der Führungsrollen unter Verschiebung der Abschnitte der Dämmstoffmatte die Dämmstoffmatte an den Mantelflächen der Führungsrollen anliegt. Zweckmäßig können mehrere der Führungselemente stationäre Führungselemente, welche üblicherweise positionsfest angeordnet sind, und mehrere der Führungselemente bewegbare Führungselemente, welche relativ zu den stationären Führungselementen gesteuert, insbesondere translatorisch, bewegbar sind, sein. Üblicherweise werden zur serpentinenartigen Faltung der Dämmstoffmatte die bewegbaren Führungselemente unter Verschiebung von Abschnitten der Dämmstoffmatte mit den bewegbaren Führungselementen zwischen den stationären Führungselementen hindurchgeführt. Im Besonderen können bei zwischen den Führungselementen hindurchgeführter Dämmstoffmatte die an einer Seite der Dämmstoffmatte angeordneten Führungselemente stationäre Führungselemente sein und die an der anderen Seite der Dämmstoffmatte angeordneten Führungselemente bewegliche Führungselemente sein. Die Anordnungsvorrichtung kann eine Zuführungseinrichtung aufweisen, mit welcher die Dämmstoffmatte zu den Führungselementen geführt wird. Die Führungselemente können nach serpentinenartiger Faltung der Dämmstoffmatte, insbesondere mit Bewegen der Führungselemente in Breitenrichtung der Dämmstoffmatte, von der Dämmstoffmatte entfernt werden.

Alternativ, insbesondere zu einer serpentinenartigen Faltung, kann es praktikabel sein, wenn die Dämmstoffmatte zur Bildung der Anordnungsform, üblicherweise um eine Wickelachse, in der Regel spiralförmig, aufgewickelt wird. Die Dämmstoffmatte kann dabei auf einen Wickelkörper aufgewickelt werden. Der Wickelkörper kann die Wickelachse definieren. Günstig ist es, wenn der Wickelkörper in einem Querschnitt orthogonal zur Wickelachse eine derart geformte Außenkontur aufweist, dass bei einem Aufwickeln der Dämmstoffmatte auf den Wickelkörper die Dämmstoffmatte eine Anordnungsform mit im Lateralquerschnitt einer, vorzugsweise mehreren, im Wesentlichen geradlinige Außenkanten bildet. Im Besonderen kann der Wickelkörper im Querschnitt orthogonal zur Wickelachse eine Außenkontur derart aufweisen, dass beim Aufwickeln der Dämmstoffmatte auf den Wickelkörper die Dämmstoffmatte mehrere einander in Überlappungsrichtung überlappende, geradlinige Dämmstoffmattensegmente, insbesondere wie in diesem Dokument beschrieben, aufweist. Günstig ist es, wenn der Wickelkörper im Querschnitt orthogonal zur Wickelachse eine Außenkontur mit einer oder mehreren geradlinigen Außenkonturabschnitten aufweist, sodass bei einem Aufwickeln des Wickelkörpers auf den Wickelkörper die geradlinigen Außenkonturabschnitte zu den geradlinigen Außenkanten der Außenkontur bzw. zu den geradlinigen Dämmstoffmattensegmenten korrespondieren. Besonders praktikabel ist es, wenn der Wickelkörper eine Aufnahme aufweist, wobei für ein Aufwickeln der Dämmstoffmatte ein Ende der Dämmstoffmatte mit der Aufnahme, insbesondere formschlüssig und/oder kraftschlüssig, aufgenommen wird, wonach die Dämmstoffmatte, insbesondere ausgehend von dem Ende der Dämmstoffmatte, auf den Wickelkörper aufgewickelt wird. Der Wickelkörper kann nach Abschluss des Aufwickelns von der Dämmstoffmatte entfernt werden. Hierzu können der Wickelkörper und das Ende der Dämmstoffmatte lösbar miteinander verbunden sein, beispielsweise durch reversibles Öffnen einer die Aufnahme begrenzenden Wickelkörperwand des Wickelkörpers.

Weitere Merkmale, Vorteile und Wirkungen der Erfindung ergeben sich aus der nachfolgenden Darstellung eines Ausführungsbeispiels. In den Zeichnungen, auf welche dabei Bezug genommen wird, zeigen:
Fig. 1 eine schematische Darstellung einer serpentinenartig gefalteten Lamellenmatte;
Fig. 2 eine schematische Darstellung eines Verfahrens zur sukzessiven Ablage einer Lamellenmatte unter serpentinenartiger Faltung der Lamellenmatte;
Fig. 3 eine schematische Darstellung eines weiteren Verfahrens zur serpentinenartigen Faltung einer Lamellenmatte mit Bildung eines serpentinenartigen Führungsweges durch Verfahren von Führungsrollen relativ zueinander;
Fig. 4 eine schematische Darstellung eines Verfahrens zum spiralförmigen Aufwickeln einer Lamellenmatte auf einen Wickelkörper.

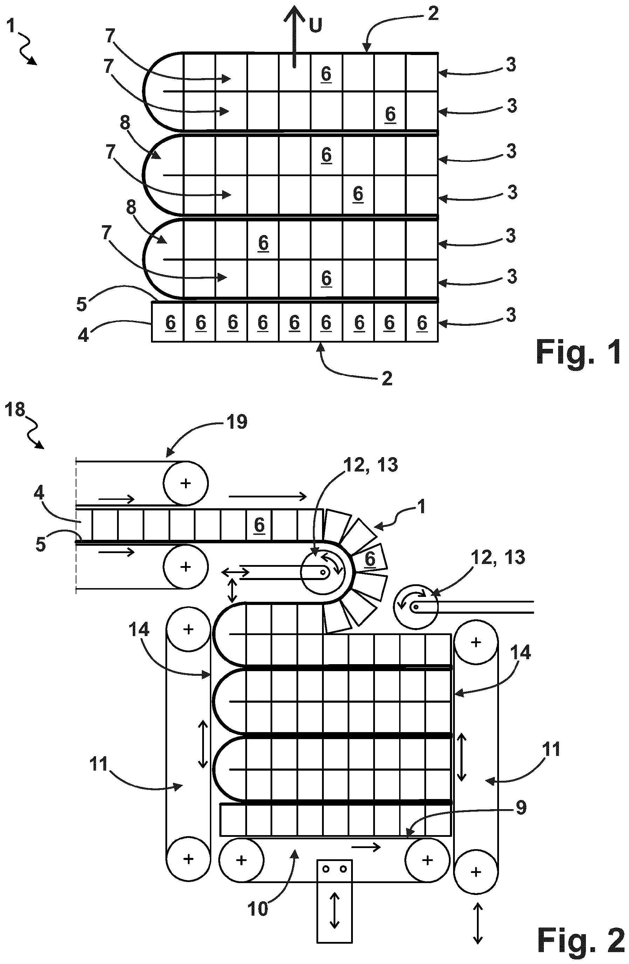

In Fig. 1 ist eine als Lamellenmatte 1 umgesetzte Dämmstoffmatte schematisch dargestellt, wobei die Lamellenmatte 1 serpentinenartig gefaltet in mehreren einander in einer Überlappungsrichtung U überlappenden Lagen 3 angeordnet ist, sodass die Lammellenmatte eine Anordnungsform bildet, welche in einem in Überlappungsrichtung U verlaufenden Lateralquerschnitt der Lamellenmatte 1 mehrere im Wesentlichen geradlinige Außenkanten 2 aufweist. Die jeweilige im Wesentlichen geradlinige Außenkante ist eine überwiegend, insbesondere im Wesentlichen, geradlinige Seitenkante der Anordnungsform. Der Lateralquerschnitt ist üblicherweise parallel zur Längserstreckung und parallel zur Höhenerstreckung der Lamellenmatte 1 orientiert. Die Lamellenmatte 1 weist aufeinander angeordnet eine Faserschicht 4 und eine Folienschicht 5 auf, wobei die Folienschicht 5 mit einer Folie und die Faserschicht 4 mit stehend auf der Folienschicht 5 angeordneten Fasern umgesetzt ist. Die Fasern sind üblicherweise an der Folienschicht 5 angeklebt. Die Folie ist üblicherweise eine Aluminiumfolie. Die Folie wird auch als Kaschierungsfolie bezeichnet. In der Regel ist die Faserschicht 4 mit mehreren quer zu einer Längsrichtung der Lamellenmatte 1 orientierten Lamellen 6, welche die Faser aufweisen, gebildet. Die Anordnungsform weist im Lateralquerschnitt zwei einander gegenüberliegende geradlinige Außenkanten 2 auf. Im Besonderen ist die Anordnungsform im Wesentlichen quaderförmig umgesetzt. Auf diese Weise ist ein praktikables Packmaß und eine einfache Stapelbarkeit von mehreren derartigen Lamellenmatten 1 erreichbar. Eine jeweilige Lage der Lamellenmatte 1 ist mit einem überwiegend, insbesondere im Wesentlichen, geradlinigen Lamellenmattensegment 7 gebildet, wobei die Lamellenmattensegmente 7 von aufeinanderliegenden Lagen 3 mit gebogenen Verbindungsbereichen 8 der Lamellenmatte 1 miteinander verbunden sind. Die Lamellenmatte 1 kann derart gefaltet sein, dass bei einer in Bezug auf die Überlappungsrichtung U obersten Lage und/oder untersten Lage der Lagen 3 jeweils die Folienschicht 5, im Besonderen die Folie, oder die Faserschicht 4 einer Außenseite der Anordnungsform zugewandt sind, insbesondere in einer Richtung parallel zur Überlappungsrichtung U.

In Fig. 2 ist eine schematische Darstellung eines Verfahrens zum sukzessiven Ablegen einer Lamellenmatte 1 auf einer Anordnungsfläche 9 unter serpentinenartiger Faltung der Lamellenmatte 1 dargestellt, um die Lamellenmatte 1 in einer Anordnungsform wie zu Fig. 1 beschrieben anzuordnen. Die Lamellenmatte 1 kann wie zu Fig. 1 beschrieben ausgebildet und serpentinenartig gefaltet werden. Die Lamellenmatte 1 wird zur Bildung der Anordnungsform in einem mit einem Boden 10, welcher die Anordnungsfläche 9 bildet, und mit quer, insbesondere orthogonal, zum Boden 10 orientierten voneinander beabstandeten Seitenwänden 11 gebildeten Aufnahmebereich unter serpentinenartiger Faltung der Lamellenmatte 1 auf der Anordnungsfläche 9 bzw. dem Boden 10 abgelegt. Zur serpentinenartigen Faltung der Lamellenmatte 1 wird die Lamellenmatte 1 sukzessive zwischen zwei gesteuert beweglichen Führungselementen 12 hindurch auf der Anordnungsfläche 9 abgelegt, wobei mit Bewegen der Führungselemente 12, insbesondere relativ zur Anordnungsfläche 9, die Lamellenmatte 1 bereichsweise mit den Führungselementen 12 derart geführt wird, sodass die Lamellenmatte 1 in einer serpentinenartigen Faltung sukzessive auf der Anordnungsfläche 9 abgelegt wird. Die Führungselemente 12 sind üblicherweise separat voneinander gesteuert, insbesondere geregelt, bewegbar. Die Bewegung der Führungselemente 12 zur Führung der Lamellenmatte 1 während des Ablegens der Lamellenmatte 1 umfasst üblicherweise ein alternierendes Bewegen der Führungselemente 12 in Richtungen quer zu einer Ablageflächennormale der Ablagefläche, wobei üblicherweise ein Abstand der Führungselemente 12 zur Ablagefläche variiert, insbesondere vergrößert, wird. Die Führungselemente 12 können Führungswalzen 13 sein, wobei eine Längsachse der jeweiligen Führungswalze üblicherweise im Wesentlichen parallel zu einer Breitenerstreckung der zwischen den Führungswalzen 13 hindurchgeführten Lamellenmatte 1 orientiert ist. Die jeweilige Führungswalze kann eine um die Längsachse der Führungswalze rotierbare Mantelfläche aufweisen. Dadurch kann ein Führen der Lamellenmatte 1 mit der Führungswalze mit Abrollen der Mantelfläche an der Lamellenmatte 1 erfolgen. Der Boden 10 kann relativ zu Wänden in einer Richtung parallel zur Anordnungsflächennormale verfahrbar sein, um den Aufnahmebereich größenzuvariieren. Im Besonderen kann der Boden 10 zwischen den Seitenwänden 11 angeordnet sein, sodass der Boden 10 zwischen den Seitenwänden 11 parallel zur Anordnungsflächennormale verfahrbar ist. Die Seitenwände 11 können jeweils eine als Bandförderer umgesetzte Förderstrecke 14 aufweisen, wobei der Bandförderer ein entlang der jeweiligen Seitenwand 11 gesteuert verfahrbares Förderband aufweist, um einen dem Aufnahmebereich zugeführten Teil der Lamellenmatte 1 bei Kontakt mit dem Förderband durch Bewegen des Förderbandes zu führen. Das Förderband des Bandförderers der jeweiligen Seitenwand 11 ist üblicherweise entlang einer Höhenerstreckung der Seitenwand 11 verfahrbar. Praktikabel ist es, wenn der Boden 10 eine Förderstrecke 14, welche als Bandförderer ausgebildet sein kann, aufweist, um nach Ablage der Lamellenmatte 1 auf der Anordnungsfläche 9 die Lamellenmatte 1 mit der Förderstrecke 14 aus dem Anordnungsbereich abzutransportieren. Das Verfahren kann mit einer Anordnungsvorrichtung 18 umgesetzt sein, welche den Boden 10, die Seitenwände 11 und die Führungselemente 12 aufweist. Die Anordnungsvorrichtung 18 kann eine Zuführungseinrichtung 19 aufweisen, mit welcher die Lamellenmatte 1 dem Aufnahmebereich zuführbar ist.

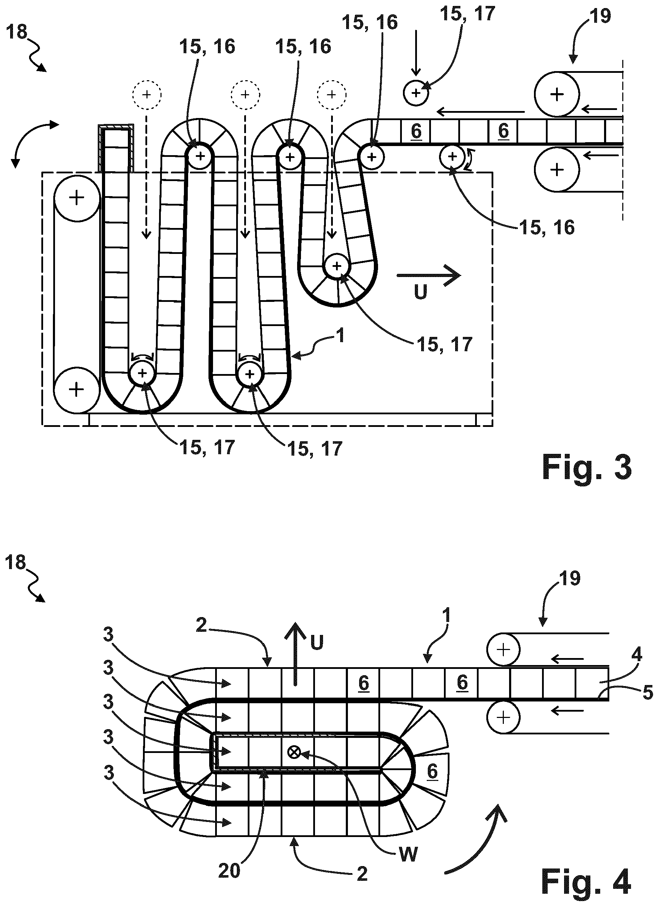

In Fig. 3 ist eine schematische Darstellung eines weiteren Verfahrens zum serpentinenartigen Falten einer Lamellenmatte 1 dargestellt, um die Lamellenmatte 1 in einer Anordnungsform wie zu Fig. 1 beschrieben anzuordnen. Die Lamellenmatte 1 kann wie zu Fig. 1 beschrieben ausgebildet und serpentinenartig gefaltet werden. Die Lamellenmatte 1 wird derart zwischen mehreren als Führungsrollen 15 umgesetzten Führungselementen 12 angeordnet, dass in einem seitlichen Querschnitt der Lamellenmatte 1 an in Bezug auf eine Längsachse der Lamellenmatte 1 einander gegenüberliegenden Seiten der Lamellenmatte 1 jeweils mehrere Führungsrollen 15 entlang einer Längserstreckung der Lamellenmatte 1 beabstandet voneinander angeordnet sind. Mehrere der Führungsrollen 15 sind stationäre Führungsrollen 15 und mehrere der Führungsrollen 15 sind relativ zu den stationären Führungsrollen 15 translatorisch bewegbare Führungsrollen 15. Die bewegbaren Führungsrollen 15 werden quer, insbesondere orthogonal, zur Längserstreckung der Lamellenmatte 1, unter Verschiebung von Abschnitten der Lamellenmatte 1 zwischen den stationären Führungsrollen 15 hindurchbewegt, sodass eine serpentinenartige Faltung der Lamellenmatte 1 gebildet wird. Die Führungsrollen 15 bilden mit translatorischem Bewegen der Führungsrollen 15 relativ zueinander einen serpentinenartigen Führungsweg, gemäß welchem die zwischen den Führungsrollen 15 angeordnete Lamellenmatte 1 gefaltet wird. Die Führungsrollen 15 können um Längsachsen der Führungsrollen 15 rotierbare Mantelflächen aufweisen, wobei bei einem relativen Bewegen der Führungsrollen 15 unter Verschiebung der Abschnitte der Lamellenmatte 1 die Lamellenmatte 1 an den Mantelflächen der Führungsrollen 15 anliegt. Praktikabel ist es, wenn die Führungsrollen 15 an einer der Seiten der Lamellenmatte 1 stationäre Führungsrollen 15 sind und die Führungsrollen 15 an der anderen Seite der Lamellenmatte 1 bewegliche Führungsrollen 15 sind. Günstig ist es, wenn während des Faltens der Lamellenmatte 1 mit den Führungsrollen 15 ein Ende der Lamellenmatte 1 fixiert ist, beispielsweise mit einer Aufnahme, in welche das Ende formschlüssig und/oder kraftschlüssig, eingefügt ist. Das Verfahren kann mit einer Anordnungsvorrichtung 18 umgesetzt sein, welche die Führungsrollen 15 aufweist. Die Anordnungsvorrichtung 18 kann eine Zuführungseinrichtung 19 aufweisen, mit welcher die Lamellenmatte 1 zu den Führungselementen 12 geführt wird. Die Führungselemente 12 können nach serpentinenartiger Faltung der Lamellenmatte 1, insbesondere mit Bewegen der Führungselemente 12 in Breitenrichtung der Lamellenmatte 1, von der Lamellenmatte 1 entfernt werden. Praktikabel ist es, wenn die Lamellenmatte 1 für ein Falten der Lamellenmatte 1 mit einer quer zu einer Vertikalen, insbesondere im Wesentlichen horizontal, orientierten, Längserstreckung der Lamellenmatte 1 zwischen den Führungsrollen 15 angeordnet wird bzw. die Lamellenmatte 1 derart gefaltet wird, dass die Überlappungsrichtung U der Lamellenmatte 1 quer zu einer Vertikalen, insbesondere im Wesentlichen horizontal, orientiert ist. Die serpentinenartig gefaltete Lamellenmatte 1 kann anschließend gedreht werden, sodass die Überlappungsrichtung U der Lamellenmatte 1 im Wesentlichen in vertikaler Richtung ausgerichtet ist.

In Fig. 4 ist eine schematische Darstellung eines Verfahrens zum spiralförmigen Aufwickeln einer Lamellenmatte 1 auf einen Wickelkörper 20 dargestellt. Die Lamellenmatte 1 kann wie zu Fig. 1 beschrieben ausgebildet sein. Im Unterschied zu Fig. 1 wird die Lamellenmatte 1 spiralförmig um eine durch den Wickelkörper 20 definierte Wickelachse W aufgewickelt. Der Wickelkörper 20 weist in einem Querschnitt orthogonal zur Wickelachse W eine Außenkontur mit mehreren geradlinigen Außenkonturabschnitten auf, sodass mit einem Aufwickeln der Lamellenmatte 1 auf den Wickelkörper 20 die Lamellenmatte 1 unter Biegung der Lamellenmatte 1 in mehreren einander in einer Überlappungsrichtung U überlappenden Lagen 3 angeordnet wird, wobei die Lamellenmatte 1 eine Anordnungsform bildet, welche in einem Lateralquerschnitt der Lamellenmatte 1 mehrere im Wesentlichen geradlinige Außenkanten 2 aufweist. Der Wickelkörper 20 ist als, insbesondere U-förmiges, Klemmelement ausgebildet, wobei für ein Aufwickeln der Lamellenmatte 1 auf den Wickelkörper 20 ein Ende der Lamellenmatte 1 formschlüssig und/oder kraftschlüssig in eine Aufnahme des Klemmelementes aufgenommen wird. Das Klemmelement kann im Lateralquerschnitt eine längliche Form, insbesondere eine im Wesentlichen rechteckige Außenkontur aufweisen. Das Klemmelement kann nach Abschluss des Aufwickelns von der Lamellenmatte 1 entfernt werden. Das Verfahren kann mit einer Anordnungsvorrichtung 18 umgesetzt sein, welche den Wickelkörper 20 und eine Zuführungseinrichtung 19 aufweist, um mit der Zuführungseinrichtung 19 die Lamellenmatte 1 dem Wickelkörper 20 zuzuführen. Der Wickelkörper 20 kann gesteuert, insbesondere geregelt, um die Wickelachse W rotiert werden, um die Lamellenmatte 1 auf den Wickelkörper 20 aufzuwickeln.

Die vorstehenden Ausführungen betreffend eine Lamellenmatte 1 können in analoger Weise für eine Dämmstoffmatte und deren Anordnung umgesetzt sein, welche Dämmstoffmatte im Unterschied zur Lamellenmatte 1 keine Strukturierung von Fasern in Form von Lamellen 6 aufweist, wenngleich die vorstehenden Ausführungen für Lamellenmatten 1 besonders geeignet sind. Die Dämmstoffmatte kann analog zu den Merkmalen der Lamellenmatte 1 ausgebildet sein.

## Patentansprüche

1. Dämmstoffmatte, insbesondere Lamellenmatte (1), welche Dämmstoffmatte übereinander angeordnet eine Faserschicht (4) und eine Folienschicht (5) aufweist, wobei die Faserschicht (4) mit quer zur Folienschicht (5) orientierten Fasern gebildet ist, **dadurch gekennzeichnet, dass** die Dämmstoffmatte für eine Lagerung oder einen Transport der Dämmstoffmatte unter Biegung der Dämmstoffmatte in mehreren einander in einer Überlappungsrichtung (U) überlappenden Lagen (3) angeordnet ist, sodass die Dämmstoffmatte eine Anordnungsform bildet, welche in einem Lateralquerschnitt der Dämmstoffmatte eine, vorzugsweise mehrere, im Wesentlichen geradlinige Außenkanten (2) aufweist.

2. Dämmstoffmatte nach Anspruch 1, **dadurch gekennzeichnet, dass** die Fasern Mineralwollfasern und/oder Glaswollfasern sind.

3. Dämmstoffmatte nach Anspruch 1 oder 2, **dadurch gekennzeichnet, dass** die Folienschicht (5) mit einer, insbesondere mit Aluminium gebildeten, Folie und/oder einem Flies, insbesondere einem Glasflies, und/oder einer Gewebeschicht gebildet ist, wobei die Fasern stehend in Bezug auf die Folienschicht (5) angeordnet und vorzugsweise mit Klebstoff und/oder thermoplastischem Kunststoff mit dieser verbunden sind.

4. Dämmstoffmatte nach einem der Ansprüche 1 bis 3, **dadurch gekennzeichnet, dass** die Faserschicht (4) mit mehreren quer zu einer Längsrichtung der Dämmstoffmatte orientierten Lamellen (6), welche die Fasern aufweisen, gebildet ist.

5. Dämmstoffmatte nach Anspruch 1, **dadurch gekennzeichnet, dass** die Anordnungsform im Lateralquerschnitt zumindest zwei einander gegenüberliegende im Wesentlichen geradlinige Außenkanten (2) aufweist, welche vorzugsweise parallel zueinander sind.

6. Dämmstoffmatte nach einem der Ansprüche 1 bis 6, **dadurch gekennzeichnet, dass** die Anordnungsform im Lateralquerschnitt im Wesentlichen rechteckig, quadratisch oder trapezförmig ausgebildet ist.

7. Dämmstoffmatte nach einem der Ansprüche 1 bis 6, **dadurch gekennzeichnet, dass** die Dämmstoffmatte zur Bildung der Anordnungsform serpentinenartig gefaltet ist.

8. Dämmstoffmatte nach einem der Ansprüche 1 bis 6, **dadurch gekennzeichnet, dass** die Dämmstoffmatte zur Bildung der Anordnungsform spiralförmig aufgewickelt ist.

9. Dämmstoffmatte nach einem der Ansprüche 1 bis 8, **dadurch gekennzeichnet, dass** die geradlinigen Außenkanten (2) der Anordnungsform durch die Folienschicht (5) gebildet sind.

10. Dämmstoffmattengebinde, aufweisend eine Dämmstoffmatte, insbesondere eine Lamellenmatte (1), nach einem der Ansprüche 1 bis 9, wobei die Dämmstoffmatte mit einem Fixiermittel, insbesondere einer Schnürung und/oder einer Fixierfolie und/oder einem Fixierband, des Dämmstoffmattengebindes in der Anordnungsform zusammengehalten wird.

11. Anordnung zur Lagerung und/oder zum Transport von mehreren Dämmstoffmatten, wobei die Anordnung mit mehreren nebeneinander und/oder übereinander angeordneten Dämmstoffmatten nach einem der Ansprüche 1 bis 9 oder mit mehreren nebeneinander und/oder übereinander angeordneten Dämmstoffmattengebinden nach Anspruch 10 gebildet ist.

12. Verfahren zum mehrlagigen Anordnen einer Dämmstoffmatte, insbesondere einer Lamellenmatte (1), für einen Transport oder eine Lagerung der Dämmstoffmatte, welche Dämmstoffmatte übereinander angeordnet eine Faserschicht (4) und eine Folienschicht (5) aufweist, wobei die Faserschicht (4) mit quer zur Folienschicht (5) orientierten Fasern gebildet ist, **dadurch gekennzeichnet, dass** die Dämmstoffmatte unter Biegung der Dämmstoffmatte in mehreren einander in einer Überlappungsrichtung (U) überlappenden Lagen (3) angeordnet wird, sodass die Dämmstoffmatte eine Anordnungsform bildet, welche in einem Lateralquerschnitt der Dämmstoffmatte eine, vorzugsweise mehrere, im Wesentlichen geradlinige Außenkanten (2) aufweist.

13. Verfahren nach Anspruch 12, **dadurch gekennzeichnet, dass** die Dämmstoffmatte zur Bildung der Anordnungsform serpentinenartig gefaltet wird, wobei die Dämmstoffmatte mit einer alternierenden Bewegung auf einer Anordnungsfläche (9) sukzessive abgelegt wird.

14. Verfahren nach Anspruch 13, **dadurch gekennzeichnet, dass** die Lamellenmatte (1) sukzessive zwischen mehreren gesteuert beweglichen Führungselementen (12) hindurch auf eine Anordnungsfläche (9) abgelegt wird, wobei mit alternierenden Bewegungen der Führungselemente (12) die Lamellenmatte (1) bereichsweise mit den Führungselementen (12) geführt wird, sodass die Lamellenmatte (1) in einer serpentinenartigen Faltung sukzessive auf der Anordnungsfläche (9) abgelegt wird.

15. Verfahren nach Anspruch 13 oder 14, **dadurch gekennzeichnet, dass** die Dämmstoffmatte zur Bildung der Anordnungsform spiralförmig auf einen Wickelkörper (20) um eine Wickelachse (W) aufgewickelt wird, wobei der Wickelkörper (20) in einem Querschnitt orthogonal zur Wickelachse (W) eine derart geformte Außenkontur aufweist, dass bei einem Aufwickeln der Dämmstoffmatte auf den Wickelkörper (20) die Dämmstoffmatte eine Anordnungsform mit im Lateralquerschnitt einer, vorzugsweise mehreren, im Wesentlichen geradlinige Außenkanten (2) bildet.
